# FASCICULE DE BREVET EUROPEEN

(11) **EP 4 016 297 B1**
(45) Date de publication et mention de la délivrance du brevet: **05.11.2025**
(21) Numéro de dépôt: 21208849.6
(22) Date de dépôt: 17.11.2021
(51) Int. Cl.: G06F 9/48, G06F 1/329

(54) **PROCÉDÉ DE GESTION DE L'EXÉCUTION D'APPLICATIONS STOCKÉES DANS UN TERMINAL**
VERFAHREN ZUR STEUERUNG DER AUSFÜHRUNG VON IN EINEM ENDGERÄT GESPEICHERTEN ANWENDUNGEN
METHOD FOR MANAGING THE EXECUTION OF APPLICATIONS STORED IN A TERMINAL

(30) Priorité: 17.12.2020 FR 2013491
(43) Date de publication de la demande: 22.06.2022
(73) Titulaire: Orange, 92130 Issy-les-Moulineaux (FR)
(72) Inventeur: MARCHAND, Hervé, 92326 Châtillon (FR); GASTE, Olivier, 92326 Châtillon (FR); RIVOALEN, Mathieu, 92326 Châtillon (FR)

(56) Documents cités:
- EP-A1- 2 957 984
- US-A1- 2012 185 776
- US-A1- 2015 309 751

## Description

### Domaine technique

L'invention se rapporte à un procédé de gestion de l'exécution d'applications stockées dans un terminal. L'invention vise tout particulièrement une gestion de l'exécution de telles applications suite au démarrage du terminal.

Le terminal visé ici inclut tout dispositif de traitement de données aptes à exécuter des applications. Le terminal est par exemple un décodeur de télévision numérique, un téléphone mobile, une tablette, etc. L'illustration de l'invention faite dans la partie description détaillée se basera sur un décodeur.

Les applications visées ici sont des programmes informatiques qui, lorsqu'ils sont exécutés, offrent un ou plusieurs services particuliers. Une application est par exemple une application dédiée à la lecture de contenus multimédias telle que l'application connue sous le nom de « Deezer » (marque déposée), ou l'application connue sous le nom de « Youtube » (marque déposée), ou toutes autres applications similaires.

### Etat de la technique

Usuellement, un terminal comporte plusieurs applications dont l'exécution entraîne une consommation électrique. Parmi les applications stockées sur le terminal, certaines sont exécutées en parallèle, le plus souvent en tâches de fond, suite au démarrage du terminal. Une exécution en tâche de fond a pour principal avantage de rendre une application accessible plus rapidement lorsqu'un utilisateur en fait la demande ; en effet, lorsque l'utilisateur sélectionne une application exécutée en tâche de fond, celle-ci ayant déjà été exécutée est prête à être utilisée quasiment sans délai.

Lorsque plusieurs applications sont exécutées au démarrage, le plus souvent en parallèle, les consommations respectives s'additionnent et forment un pic de consommation qui peut être supérieur à la puissance instantanée délivrée par le terminal. Par exemple, si le terminal est alimenté par l'intermédiaire d'une connexion USB de type (5V/1A) pouvant fournir une puissance de cinq watts (5 Watts) ; dans ce cas, la somme des puissances électriques consommées par l'ensemble des applications ne doit pas dépasser cinq Watts (5 Watts). Or, on constate aujourd'hui que certaines applications consomment une puissance de l'ordre d'un Watt (1Watt) lors de leur exécution. Le nombre d'applications exécutables en tache de fond ne peut donc pas dépasser théoriquement cinq applications. Au-delà d'une consommation instantanée de cinq Watts, le terminal ne peut fournir une puissance électrique suffisante. Il résulte de cette insuffisance, un redémarrage (« boot » en anglais) du terminal, voire une répétition de redémarrages. L'utilisateur souhaitant utiliser une application voit le terminal redémarrer une ou plusieurs fois. L'expérience utilisateur est déplorable.

On connaît de l'état de la technique le document EP 2 957 984 qui décrit un procédé qui vise à éviter un pic de consommation au démarrage des applications dans un terminal. Il propose d'étaler le démarrage des applications dans le temps mais ne permet pas d'éviter les redémarrages intempestifs.

L'invention vient améliorer la situation.

### L'invention

A cet effet, l'invention concerne un procédé de gestion tel que défini dans la revendication 1.

Selon l'invention, les applications programmées pour être exécutées dès le démarrage vont être exécutées à des instants distincts étalés dans le temps. L'étalement dans le temps des exécutions des applications permet de lisser dans le temps la consommation en électricité liée à l'exécution des applications. L'invention évite ainsi une série de redémarrages intempestifs liés à une puissance instantanée insuffisante du terminal.

L'invention favorise la rapidité d'accès aux applications en ne mettant en œuvre l'étalement que si celui-ci est utile. En effet, si l'exécution de plusieurs applications, dès le démarrage, n'entraîne pas un dépassement de la puissance instantanée du terminal, l'étalement n'a, dans ce cas, aucun intérêt et serait même néfaste en termes de rapidité d'accès. A l'inverse, si la durée entre deux démarrages consécutifs est inférieure à une durée donnée, cela est probablement dû à une incapacité de fournir suffisamment de puissance pour l'exécution de toutes les applications à un instant donné ; dans ce cas, l'invention vient améliorer la situation en évitant des redémarrages intempestifs.

Selon l'invention, lorsque le terminal redémarre et que la durée qui sépare ce démarrage et le précédent démarrage est inférieure à une durée donnée, la durée entre les instants d'exécution des applications est augmentée. L'invention fait en sorte que les paramètres de configuration de l'étalement évoluent dans le temps après chaque démarrage intempestif pour arriver à un démarrage qui aboutit favorablement. Les paramètres résultants de la modification sont stockés en mémoire morte pour être réutilisés au prochain démarrage du terminal.

Selon une variante, la durée entre les instants d'exécution des applications est augmentée que si la durée entre deux démarrages est inférieure à une durée donnée plusieurs fois consécutivement. Cette variante évite d'opérer une modification sur la durée entre les instants d'exécution des applications à chaque redémarrage intempestif ; on réduit ainsi la consommation électrique du terminal.

Selon un premier mode de réalisation de l'invention, qui pourra être mis en œuvre alternativement ou cumulativement avec les précédents, le décalage comprend une étape de détection de la fin d'exécution d'une application, la fin de l'exécution déclenchant l'exécution de l'application suivante. Ce troisième mode garantit qu'une seule application sera exécutée à la fois.

Selon un deuxième mode de réalisation de l'invention, qui pourra être mis en œuvre alternativement ou cumulativement avec les précédents, le décalage dans le temps comprend une planification préalable des instants d'exécution des applications. Ce mode est moins précis que le troisième mode mais plus simple à mettre en œuvre car évite de détecter la fin d'exécution d'une application ; tous les instants sont programmés initialement. Ces instants d'exécution sont dans l'idéal choisis de telle manière qu'une seule application, ou groupe d'applications, soit exécutée à la fois.

Selon un troisième mode de réalisation de l'invention, qui pourra être mis en œuvre alternativement ou cumulativement avec les précédents, les applications sont regroupées en plusieurs groupes. Dans ce cas, le procédé comprend un étalement des instants d'exécution de groupes d'applications. Ce sixième mode permet d'exécuter quelques applications en même temps plutôt que de les exécuter les unes après les autres. Dans cette configuration, les exécutions des applications étant groupées, les applications sont accessibles plus rapidement.

Selon un quatrième mode de réalisation de l'invention, qui pourra être mis en œuvre alternativement ou cumulativement avec les précédents, lorsque le terminal redémarre et que la durée qui sépare ce démarrage et le précédent démarrage est inférieure à une durée donnée, le nombre d'applications par groupe est diminué.

Selon un cinquième mode de réalisation de l'invention, les applications concernées par un étalement sont des applications s'exécutant en tâche de fond de manière à être utilisées sans délai sur requête d'un utilisateur..

Selon un aspect matériel, l'invention se rapporte à une entité de gestion telle que définie dans la revendication 7.Selon un autre aspect matériel, l'invention a trait à un programme d'ordinateur apte à être mis en œuvre dans une entité de gestion tel que définie ci-dessus, ledit programme comprenant des instructions de code qui, lorsque le programme est exécuté réalise l'étape définie dans le procédé défini ci-dessus.

Selon un autre aspect matériel, l'invention a trait à un support d'enregistrement lisible par un processeur de données sur lequel est enregistré un programme comprenant des instructions de code de programme pour l'exécution des étapes du procédé défini ci-dessus.

Précisions ici que le support de données peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, ou un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
[Fig 1] représente un système informatique sur lequel est illustré un exemple de réalisation de l'invention.
[Fig 2] est une vue schématique des circuits présents dans le terminal.
[Fig 3] est une vue schématique des étapes mises en œuvre selon un mode de réalisation possible de l'invention ; ce mode mettant en œuvre l'étalement sans condition.
[Fig 4] est une vue schématique d'un exemple de mise en œuvre possible d'étalement dans le temps.
[Fig 5] est une vue schématique d'un autre exemple de mise en œuvre possible d'étalement dans le temps.
[Fig 6] est une vue schématique d'un autre exemple de mise en œuvre possible d'étalement dans le temps appliqué à des groupes d'applications.
[Fig 7] est une vue schématique des étapes mises en œuvre selon un autre mode de réalisation possible de l'invention ; ce mode mettant en œuvre l'étalement sous condition.

Description détaillée d'un exemple de réalisation illustrant l'invention :

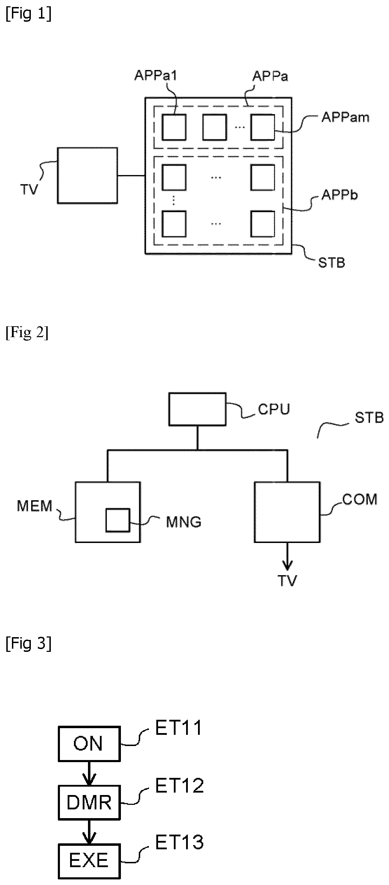

La figure 1 représente un dispositif de traitement de données STB sur lequel sont stockées des applications (APP1-APPn).

Le dispositif est par exemple un décodeur STB. Le décodeur STB est relié à un dispositif de restitution dispositif de restitution TV pour y restituer des contenus accessibles via des applications logicielles stockées dans le terminal.

Le décodeur STB et le dispositif de restitution TV peuvent former un seul dispositif ou être reliés entre eux via une liaison filaire (Ethernet, etc.) ou non filaire (WiFi, etc.).

Sur cette figure 1, sont représentés des applications. Dans notre exemple, le décodeur STB stocke deux ensembles d'applications APPa (APPa1-APPan) et APPb. Les applications de l'ensemble APPa sont programmées pour être exécutées dès le démarrage du décodeur STB, par exemple en parallèle. Les applications de l'ensemble APPb s'exécutent sur demande explicite d'un utilisateur qui va sélectionner l'application et demander son exécution.

On s'intéresse ici aux applications de l'ensemble APPa.

Dans notre exemple, les applications APPa1-APPan de l'ensemble APPa s'exécutent automatiquement en tache de fond de façon transparente pour l'utilisateur. L'avantage de l'exécution en parallèle dès le démarrage est que les applications sont disponibles plus rapidement lorsqu'un utilisateur souhaite utiliser une application. Si un utilisateur sélectionne l'une des applications, par exemple l'application APPa1, celle-ci ayant déjà été exécutée sera accessible quasiment sans délai.

La figure 2 représente une architecture d'un décodeur STB. Le décodeur STB comprend, classiquement, des mémoires M associées à un processeur CPU. Les **mémoires** peuvent être de type ROM (de l'anglais « Read Only Memory ») ou RAM (de l'anglais « Random Access Memory ») ou encore Flash.

Le décodeur STB comprend en outre une entité de gestion MNG, stockée en mémoire, dont la fonction sera expliquée ci-après.

Rappelons que, généralement, au démarrage (« boot » en anglais), un ordinateur exécute
- un système d'exploitation OS (Operating System en Anglais) qui englobe un ensemble de programmes qui dirige l'utilisation des capacités d'un appareil informatique par des logiciels applicatifs,
- un microprogramme (firmware (FW) en Anglais) qui est une couche logicielle développée et intégrée au sein d'un appareil informatique par les constructeurs. Ce microprogramme apporte un certain nombre de fonctionnalités. Outre cet apport, la principale fonction d'un microprogramme est de réaliser une communication entre l'OS et le matériel (hardware) du décodeur afin d'assurer le bon fonctionnement de ce dernier.

Nous n'entrerons pas dans les détails d'exécution du système d'exploitation et du microprogramme car sans intérêt pour l'exposé de l'invention. On désignera ces deux exécutions par « démarrage » dans la suite.

Suite au démarrage, voire parallèlement au démarrage, le décodeur STB, sous-entendu le processeur CPU, exécute des applications. Par exemple le décodeur affiche une interface homme machine IHM pour l'accès à la télévision, à la VOD, etc., sur l'écran dès le démarrage. D'autres applications sont exécutées en tâche de fond c'est-à-dire qu'elles sont exécutées mais ne sont pas affichées sur le dispositif de restitution TV.

Lorsqu'un utilisateur démarre le décodeur STB, cet utilisateur va souhaiter accéder à une des applications en particulier. Pour réduire le temps d'affichage de cette application, et ne sachant pas quelle application l'utilisateur va sélectionner, plusieurs applications, par exemple les plus utilisées par l'utilisateur, vont être exécutées suite au démarrage.

En temps normal les exécutions se font parallèlement. Cependant, les inventeurs ont constaté des redémarrages intempestifs du décodeur liés au fait que le décodeur STB ne fournit pas une puissance électrique suffisante pour exécuter toutes les applications en parallèle.

L'invention propose, suite au démarrage du terminal, un étalement dans le temps des exécutions des applications prévues d'être exécutées en parallèle. On verra dans un mode de réalisation que l'étalement dans le temps est mis œuvre lorsque le terminal redémarre au moins un fois de suite avec une durée entre redémarrages consécutifs inférieure à une durée donnée

La figure 3 illustre un premier mode de réalisation. Dans ce premier mode, on considère que le module de gestion MNG étale dans le temps l'exécution des applications dès le premier démarrage sans condition. On verra en effet dans un autre mode de réalisation que le module de gestion met en œuvre l'invention sous condition.

Lors d'une première étape ET11, le décodeur STB est mis sous tension (ON) et démarre.

Lors d'une deuxième étape ET12, le décodeur STB termine le démarrage DRM.

Suite au démarrage, voire au cours du démarrage, lors d'une troisième étape ET13 (EXE), l'entité de gestion MNG étale dans le temps l'exécution des applications APPa1-APPan.

A noter ici que le principe de l'invention s'applique à une application ou à un groupe d'applications. En d'autres mots, l'étalement peut concerner des applications ou des groupes d'applications.

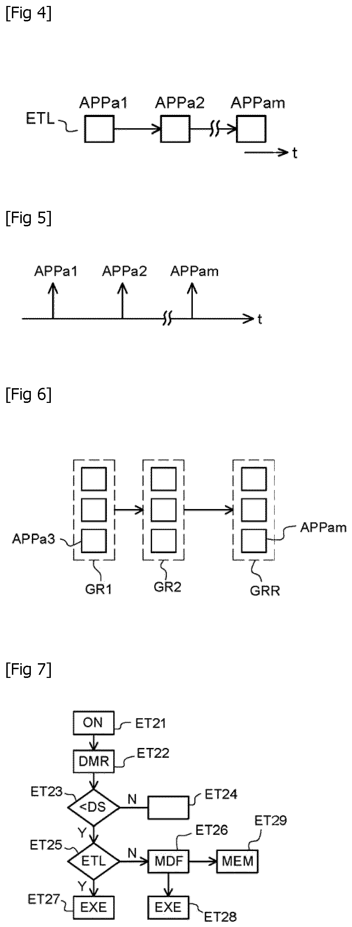

En référence à la figure 4, l'étalement peut consister à exécuter les applications APPa1-APPan successivement ou des groupes d'applications successivement comme décrit ci-dessous en référence à la figure 6.

L'étalement dans le temps peut être réalisé selon plusieurs variantes.

Selon une première variante, toujours en référence à la figure 3, les applications APPa1-APPan sont ordonnées et exécutées les unes après les autres, la fin d'exécution d'une application APPi, ou approximativement la fin, déclenchant l'exécution de la suivante APPi+1. Une temporisation peut aussi être prévue entre la fin d'une exécution et le début de la suivante.

Selon une deuxième variante, en référence à la figure 4, les instants de d'exécution des applications peuvent être planifiés à des instants distincts. Par exemple, les applications APPa1-APPan, ou groupes d'application, sont exécutées toutes les « N » secondes. A la différence de la première variante, cette deuxième variante ne prend pas en compte la durée effective d'exécution d'une application. La planification peut être modifiée au fil du temps comme cela sera expliqué ci-dessous ; une modification sera appliquée par exemple dans le cas où la configuration courante de l'étalement n'est pas suffisante du fait d'une puissance électrique instantanée du décodeur STB trop faible.

Selon un deuxième mode de réalisation, décrit en référence à la figure 7, le procédé de l'invention est mis en œuvre sous condition. La condition est le terminal redémarre au moins une fois de suite avec une durée entre démarrages consécutifs inférieure à une durée donnée. Dans notre exemple, la condition est que la durée entre deux démarrages consécutifs est inférieure à une durée seuil. Ce cas se présente, en effet, lorsque le décodeur STB ne fournit pas une puissance suffisante pour exécuter les applications APPa1-APPan en parallèle ; le décodeur STB redémarre une fois voire plusieurs fois tant qu'il n'arrive pas à fournir suffisamment d'électricité. Ces redémarrages intempestifs sont reconnaissables par une durée assez courte entre chaque redémarrage de l'ordre de 3 à 4 secondes. La valeur seuil visée ci-dessus est par exemple une moyenne calculée sur des durées entre démarrages intempestifs constatés dans le passé. La durée seuil peut aussi être la valeur maximale des durées obtenues entre démarrages intempestifs sur une plage temporelle passée donnée.

Ce deuxième mode vient améliorer la situation.

Dans ce deuxième mode on fixe la durée seuil par exemple à 3 minutes.

Lors d'une première étape ET21, le décodeur STB est mis sous tension (ON) et démarre.

Lors d'une deuxième étape ET22, le décodeur STB termine le démarrage. DRM

Suite au démarrage, voire parallèlement, l'exécution des applications peut démarrer.

Dans ce deuxième mode, lors d'une troisième étape ET23, le décodeur STB vérifie avant d'exécuter les applications si la durée entre le début du démarrage courant et le précédent est inférieur à la durée seuil. Cette vérification peut être effectuée en comparaison les dates et heures des instants d'exécution des applications concernées. Selon une variante, l'entité de gestion MNG vérifie si la durée entre deux démarrages successifs est inférieure à une durée donnée plusieurs fois consécutivement ; par exemple l'entité de gestion constate que le décodeur redémarre pour la quatrième fois en vain.

Dans la négative, lors d'une étape suivante ET24, le procédé se poursuit avec les paramètres de configuration utilisés lors du précédent démarrage.

Dans l'affirmative, si des redémarrages intempestifs se produisent, lors d'une étape ET25, l'entité de gestion MNG vérifie si un étalement ETL est déjà configuré.

Si aucun étalement n'était pas initialement prévu, l'entité de gestion MNG met en œuvre, lors d'une étape suivante ET27 (EXE), un étalement dans le temps comme dans le premier mode de réalisation.

Si un étalement dans le temps était prévu, lors d'une étape ET26(MDF), les paramètres de cet étalement sont modifiés pour améliorer la situation. Par exemple, si l'étalement utilisé correspond à la première variante du premier mode de réalisation, une temporisation, voire une modification de la temporisation si celle-ci était déjà configurée, peut être déclenchée lorsque l'exécution d'une application est terminée. Cette temporisation, ou la nouvelle temporisation, ajoute un délai supplémentaire entre instants d'exécutions consécutifs. Si l'étalement utilisé correspond à la deuxième variante du premier mode de réalisation, la planification est modifiée. Par exemple, l'exécution n'a pas lieu toutes les « N » secondes mais toutes les « M » (M>N, « > » est le symbole supérieur utilisé en mathématiques) secondes.

Suite à la création de l'étalement, ou à la modification des paramètres de l'étalement dans le temps, selon le cas, le décodeur STB met en œuvre l'étalement lors d'une étape ET27(EXE) ou ET28(EXE), respectivement.

Suite à l'étape ET26, dans notre exemple, les nouveaux paramètres de configuration de l'étalement sont stockés en mémoire lors d'une étape ET29(MEM) pour être réutilisé au prochain démarrage. La date et heure du dernier démarrage sont également mémorisées.

Dans notre exemple, les paramètres de l'étalement sont modifiés autant de fois que le décodeur STB redémarre consécutivement avec une durée entre les redémarrages inférieure à la durée seuil visée ci-dessus ; selon une variante, les paramètres de l'étalement ne sont pas modifiés à chaque redémarrage mais tous « n » redémarrages consécutifs.

A noter que l'heure et la date de chaque démarrage sont stockées en mémoire de manière à réaliser cette étape de comparaison. Aussi, à chaque modification des paramètres de l'étalement dans le temps, suite aux redémarrages intempestifs, les paramètres sont stockés dans la mémoire morte pour être réutilisées par la suite.

Aussi, les dates et heures des démarrages sont stockées dans le décodeur STB. Cette mémorisation permet de comparer l'instant courant avec l'instant précédent et de déterminer si le redémarrage est lié à un problème de puissance délivré par le décodeur STB.

Les différents types d'étalement décrits dans la présente demande sont applicables à tous les modes de réalisation décrits.

Comme on l'a vu précédemment, l'étalement concerne principalement des applications prévues pour être exécutées en parallèle suite au démarrage. Ces applications sont en général des applications souvent utilisées par l'utilisateur du terminal. L'invention est d'autant plus intéressante que le nombre d'applications à exécuter en tâche de fond est important.

L'ordre temporel des instants d'exécution des applications objet de l'étalement dans le temps peut aussi être choisi judicieusement. Par exemple, la probabilité d'utiliser une application plus qu'une autre peut être prise en compte pour établir un ordre d'exécution des applications ; plus il est probable que l'application soit utilisée, plus il est judicieux de l'exécuter le plus tôt possible.

On a vu aussi précédemment que l'étalement dans le temps concernait l'étalement d'exécution de chaque application. En variante, en référence à la figure 6, l'étalement peut concerner des groupes d'applications. Par exemple, si les applications sont au nombre de dix, deux groupes de cinq applications peuvent être créés. Les deux groupes sont ensuite gérés l'un après l'autre, les applications d'un même groupe étant exécutées en parallèle.

Sur la figure 6, des groupes de trois applications sont illustrés. Un premier groupe GR1 comprend les applications APPa1-APPa3, un deuxième groupe GR2 comprend les applications APPa4-APPa6, etc. Un dernier groupe GRk comprend les applications APPan-2-Appan. L'étalement consiste à exécuter les applications du premier groupe GR1 en parallèle ; ensuite, les applications du deuxième groupe sont exécutées en parallèle, etc.

Si le terminal redémarre et que la durée entre les redémarrages consécutifs est inférieure à une durée donnée, selon une variante, le nombre d'applications par groupe peut être diminué pour réduire la consommation électrique du groupe concerné. Par exemple, le nombre d'applications par groupe peut être réduit à deux applications au lieu de trois applications.

Enfin, l'invention s'applique tout particulièrement aux applications s'exécutant en tâche de fond sans se limiter à celles-ci.

Signalons enfin ici que, dans le présent texte, le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé de gestion de l'exécution d'applications (APPa1-APPan) stockées dans un terminal (STB), les applications étant programmées pour être exécutées lors du démarrage du terminal, **caractérisé en ce qu'**il comprend, lorsque le terminal redémarre au moins une fois de suite avec une durée entre démarrages consécutifs inférieure à une durée donnée, une augmentation de la durée entre instants d'exécutions des applications.

2. Procédé de gestion selon la revendication 1, **caractérisé en ce que** la durée entre les instants d'exécution des applications n'est augmentée que si la durée entre deux démarrages est inférieure à une durée donnée plusieurs fois consécutivement.

3. Procédé de gestion selon l'une des revendications précédentes, **caractérisé en ce qu'**il comprend une étape de détection de la fin d'exécution d'une application, la fin de l'exécution déclenchant l'exécution de l'application suivante.

4. Procédé de gestion selon l'une des revendications précédentes, **caractérisé en ce qu'**il comprend une planification préalable des instants d'exécution des applications.

5. Procédé de gestion selon l'une des revendications précédentes, **caractérisé en ce que** les applications sont regroupées en plusieurs groupes, et **en ce qu'**il comprend un étalement des instants d'exécution des groupes d'applications.

6. Procédé de gestion selon la revendication 5, **caractérisé en ce que**, lorsque le terminal redémarre et que la durée qui sépare ce démarrage et le précédent démarrage est inférieure à une durée donnée, le nombre d'applications par groupe est diminué.

7. Entité de gestion (MNG) de l'exécution d'applications stockées dans un terminal, les applications étant programmées pour être exécutées lors du démarrage du terminal, **caractérisé en ce qu'**il comprend un module apte, lorsque le terminal redémarre au moins une fois de suite avec une durée entre démarrages consécutifs inférieure à une durée donnée, à augmenter la durée entre instants d'exécutions des applications.

8. Terminal (STB) **caractérisé en ce qu'**il comprend une entité de gestion (MNG) telle que définie dans la revendication 7.

9. Programme d'ordinateur apte à être mis en œuvre dans une entité de gestion telle que définie dans la revendication 7, ledit programme comprenant des instructions de code qui, lorsque le programme est exécuté réalise l'étape définie dans la revendication 1.

10. Support d'enregistrement lisible par un processeur de données sur lequel est enregistré un programme tel que défini dans la revendication 9.

## Patentansprüche

1. Verfahren zur Steuerung der Ausführung von Anwendungen (APPa1-APPan), die in einem Endgerät (STB) gespeichert sind, wobei die Anwendungen so programmiert sind, dass sie beim Starten des Endgeräts ausgeführt werden, **dadurch gekennzeichnet, dass** es, wenn das Endgerät mindestens ein Mal in Folge mit einer Dauer zwischen aufeinander folgenden Starts, die geringer als eine gegebene Dauer ist, neu startet, eine Verlängerung der Dauer zwischen Ausführungszeitpunkten der Anwendungen umfasst.

2. Verfahren zur Steuerung nach Anspruch 1, **dadurch gekennzeichnet, dass** die Dauer zwischen den Ausführungszeitpunkten der Anwendungen nur verlängert wird, wenn die Dauer zwischen zwei Starts mehrmals nacheinander geringer als eine gegebene Dauer ist.

3. Verfahren zur Steuerung nach einem der vorhergehenden Ansprüche, **dadurch gekennzeichnet, dass** es einen Schritt des Detektierens des Ausführungsendes einer Anwendung umfasst, wobei das Ende der Ausführung die Ausführung der folgenden Anwendung auslöst.

4. Verfahren zur Steuerung nach einem der vorhergehenden Ansprüche, **dadurch gekennzeichnet, dass** es eine vorherige Planung der Ausführungszeitpunkte der Anwendungen umfasst.

5. Verfahren zur Steuerung nach einem der vorhergehenden Ansprüche, **dadurch gekennzeichnet, dass** die Anwendungen zu mehreren Gruppen zusammengefasst sind und dass es eine Staffelung der Ausführungszeitpunkte der Gruppen von Anwendungen umfasst.

6. Verfahren zur Steuerung nach Anspruch 5, **dadurch gekennzeichnet, dass**, wenn das Endgerät neu startet und die Dauer, die dieses Starten und das vorherige Starten trennt, geringer als eine gegebene Dauer ist, die Anzahl von Anwendungen je Gruppe verringert wird.

7. Steuerungseinheit (MNG) zur Steuerung der Ausführung von Anwendungen, die in einem Endgerät gespeichert sind, wobei die Anwendungen so programmiert sind, dass sie beim Starten des Endgeräts ausgeführt werden, **dadurch gekennzeichnet, dass** sie ein Modul umfasst, das geeignet ist, wenn das Endgerät mindestens ein Mal in Folge mit einer Dauer zwischen aufeinander folgenden Starts, die geringer als eine gegebene Dauer ist, neu startet, die Dauer zwischen Ausführungszeitpunkten der Anwendungen zu verlängern.

8. Endgerät (STB), **dadurch gekennzeichnet, dass** es eine Steuerungseinheit (MNG) wie in Anspruch 7 definiert umfasst.

9. Computerprogramm, das geeignet ist, in einer Steuerungseinheit wie in Anspruch 7 definiert implementiert zu werden, wobei das Programm Codeanweisungen umfasst, die bei der Ausführung des Programms den in Anspruch 1 definierten Schritt ausführen.

10. Speichermedium, das von einem Datenprozessor gelesen werden kann und auf dem ein Programm wie in Anspruch 9 definiert gespeichert ist.

## Claims

1. Method for managing the execution of applications (APPa1-APPan) stored in a terminal (STB), the applications being programmed to be executed upon startup of the terminal, **characterized in that** it comprises, when the terminal restarts at least once in a row with a duration between consecutive startups that is less than a given duration, an increase in the duration between execution times of the applications.

2. Management method according to Claim 1, **characterized in that** the duration between the execution times of the applications is increased only if the duration between two startups is less than a given duration several times in a row.

3. Management method according to one of the preceding claims, **characterized in that** it comprises a step of detecting the end of execution of an application, the end of the execution triggering the execution of the following application.

4. Management method according to one of the preceding claims, **characterized in that** it comprises prior scheduling of the execution times of the applications.

5. Management method according to one of the preceding claims, **characterized in that** the applications are grouped into multiple groups, and **in that** it comprises spreading the execution times of the groups of applications.

6. Management method according to Claim 5, **characterized in that**, when the terminal restarts and the duration between this startup and the previous startup is less than a given duration, the number of applications per group is reduced.

7. Entity (MNG) for managing the execution of applications stored in a terminal, the applications being programmed to be executed upon startup of the terminal, **characterized in that** it comprises a module able, when the terminal restarts at least once in a row with a duration between consecutive startups that is less than a given duration, to increase the duration between execution times of the applications.

8. Terminal (STB), **characterized in that** it comprises a management entity (MNG) as defined in Claim 7.

9. Computer program able to be implemented in a management entity as defined in Claim 7, said program comprising code instructions that, when the program is executed, perform the step defined in Claim 1.

10. Storage medium readable by a data processor and on which is stored a program as defined in Claim 9.
